# EUROPÄISCHE PATENTSCHRIFT

(11) **EP 0 520 142 B1**
(45) Veröffentlichungstag und Bekanntmachung des Hinweises auf die Patenterteilung: **29.06.1994**
(21) Anmeldenummer: 92104735.3
(22) Anmeldetag: 19.03.1992
(51) Int. Cl.: F16F 13/00, F16F 3/08, B60K 5/12

(54) **Steuerbares Motorlager**
Controllable engine mount
Support de moteur réglable

(30) Priorität: 25.06.1991 DE 4120840
(43) Veröffentlichungstag der Anmeldung: 30.12.1992
(73) Patentinhaber: Firma Carl Freudenberg, 69469 Weinheim (DE)
(72) Erfinder: Winkler, Gerold, W-6943 Birkenau (DE); Ticks, Gerd-Heinz, W-6948 Walmichelbach (DE); Schmitt, Ludwig, W-6943 Birkenau (DE)

(56) Entgegenhaltungen:
- EP-A- 0 119 626
- EP-A- 0 480 460
- DE-A- 3 403 002
- GB-A- 2 165 027
- US-A- 2 156 301
- PATENT ABSTRACTS OF JAPAN vol. 6, no. 33 (M-114)(911) 27. Februar 1982
- PATENT ABSTRACTS OF JAPAN vol. 11, no. 160 (M-592)(2607) 23. Mai 1987

## Beschreibung

Die Erfindung betrifft ein steuerbares Motorlager, bestehend aus einem Traglager und einem Auflager, die parallel zueinander durch ein erstes und ein zweites Federelement aus Gummi aufeinander abgestützt sind, wobei eines der Federelemente durch ein Hilfsmittel bedarfsweise blockierbar ist.

Ein solches Motorlager ist aus der DE-PS 34 03 002 bekannt. Danach beruht die Funktion des Lagers auf dem Zusammenwirken zweier Federelemente mit unterschiedlicher Federcharakteristik und einer Schaltkupplung. Die elektromagnetisch betätigbare Schaltkupplung ist mit dem relativ härteren Federelement in Serie geschaltet und diese Einheit ist parallel zu dem relativ weicheren Federelement angeordnete. Bei unbetätigter Schaltkupplung werden höher frequente Schwingungen mit kleinen Amplituden von dem relativ weicheren Federelement isoliert. Bei betätigter Schaltkupplung ergibt sich eine zusammengesetzte Federcharakteristik aus den durch die Schaltkupplung verbundenen Federelementen zur Dämpfung niedrig frequenter Schwingungen mit großen Amplituden.

Dabei ist allerdings zu beachten, daß das Motorlager einen komplizierten inneren Aufbau, bestehend aus vielen zu befestigenden Einzelteilen aufweist und daher in wirtschaftlicher Hinsicht wenig befriedigend ist. Auch die großen Abmessungen in axialer Richtung und das hohe Gewicht des montierten Motorlagers sind, konstruktionsbedingt, nachteilig.

Der Erfindung liegt die Aufgabe zugrunde, ein Motorlager der eingangs genannten Art derart weiterzuentwickeln, daß Schwingungen kleiner Amplituden gut isoliert und große Relativbewegungen zwischen dem Traglager und dem Auflager vermieden werden, das Lager dabei jedoch einfacher, mit weniger Teilen und wirtschaftlicher herstellbar ist und gleichzeitig geringere Abmessungen und weniger Gewicht aufweist.

Diese Aufgabe wird erfindungsgemäß mit den kennzeichnenden Merkmalen von Anspruch 1 gelöst. Auf vorteilhafte Ausgestaltung nehmen die Unteransprüche bezug.

Bei dem erfindungsgemäßen Motorlager ist es vorgesehen, daß das erste Federelement das zweite Federelement in axialer Richtung zumindest teilweise übergreift, daß das zweite Federelement eine mittig angeordnete Ausnehmung aufweist sowie zumindest ein ringförmiges Verstärkungselement radial außerhalb der Ausnehmung, das im Wesentlichen unverrückbar mit dem zweiten Federelement verbunden ist, daß in die Ausnehmung ein fließfähiges Medium einspeisbar ist und daß das zweite Federelement in Abhängigkeit von dem jeweiligen Druck des Mediums im Bereich der Ausnehmung versteifbar ist.
Durch die im wesentlichen konzentrische Anordnung der beiden Federelemente weist das Lager geringe Abmessungen sowohl in axialer als auch in radialer Richtung auf. Das teilearme, steuerbare Motorlager isoliert höher frequente Schwingungen mit kleinen Amplituden dadurch, daß das zweite Federelement im Bereich der Ausnehmung nicht vollständig an der Umfangswandung des Verstärkungselementes anliegt und so eine weichere Gesamtfedercharakteristik des Lagers bedingt.

Beim Befahren unebener Straßen oder beim Überfahren von Bordsteinkanten, wenn große Relativbewegungen zwischen Traglager und Auflager entstehen, wird durch das Einbringen eines druckbeaufschlagten, fließfähigen Mediums ein relativer Überdruck in der Ausnehmung des zweiten Federelementes erzeugt. Das zweite Federelement legt sich dann im Bereich der Ausnehmung an das benachbarte Verstärkungselement an und verhärtet so die Gesamtfedercharakteristik des Lagers. Die auf das Lager einwirkende Kraft wird im wesentlichen nur noch durch das zweite Federelement mit der druckbeaufschlagten Ausnehmung aufgenommen. Auf diese Weise werden niedrig frequente Schwingungen mit großen Amplituden wirkungsvoll gedämpft. Eine Feinabstimmung der Federcharakteristik ist durch ausgesuchte Materialien für das erste und das zweite Federelement zu erzielen. Dabei besteht die Möglichkeit, daß die Werkstoffe des ersten und des zweiten Federelementes gleich oder unterschiedlich beschaffen sind. Der Öffnungsquerschnitt der Ausnehmung des zweiten Federelementes muß möglichst groß gewählt werden, so daß keine Resonanzschwingung der Fluidsäule in der Leitung erzeugt wird. Als druckbeaufschlagbares, fließfähiges Medium kann sowohl ein Fluid, als auch Gas zur Anwendung gelangen.

Das Verstärkungselement kann auf dem Außenumfang des zweiten Federelementes festgelegt und beispielsweise durch einen Ring gebildet sein, der aus einem metallischen Werkstoff oder aus Kunststoff besteht und in einer Nut des zweiten Federelementes angeordnet ist. Der Ring kann, je nach Abstand des ersten Federelementes vom zweiten Federelement, in radialer Richtung bündig mit dem zweiten Federelement abschließen, was besonders kompakte Abmessungen des Motorlagers in radialer Richtung bedingt. Das Motorlager zeichnet sich durch besonders wirtschaftliche Herstellbarkeit aus.

Gemäß einer weiteren vorteilhaften Ausgestaltung ist es vorgesehen, daß das Verstärkungselement in das zweite Federelement eingebettet ist. Neben geringen Abmessungen in radialer Richtung weist ein solches Lager ausgezeichnete Gebrauchseigenschaften bei hoher Gebrauchsdauer auf. Das Verstärkungselement kann dabei aus Kunststoff oder einem metallischen Werkstoff bestehen, einstückig oder mehrteilig ausgebildet sein und in Form einer Armierung in das zweite Federelement eingebettet sein. Das Verstärkungselement ist so auszubilden und anzuordnen, daß es in radialer Richtung nach innen eine vergleichsweise große Nachgiebigkeit aufweist um so die Isolierung höher frequenter Schwingungen zu ermöglichen. Bei Druckbeaufschlagung der Ausnehmung dagegen begrenzt das Verstärkungselement die Ausdehnung der Ausnehmung in radialer Richtung nach außen, so daß sich bei weitgehend zylindrischer Gestalt des zweiten Federelementes ein Druck aufbauen kann, der niedrig frequente Schwingungen wirkungsvoll dämpft.

Das Verstärkungselement kann aus einem schlauchförmigen, textilen Flächengebilde bestehen. Dieses textile, schlauchförmige Flächengebilde untergreift beispielsweise das zweite Federelement einerseits topfförmig und erstreckt sich in axialer Richtung, ähnlich wie die Armierung des Verstärkungselementes, das in das zweite Federelement eingebettet ist, über die gesamte Länge der Ausnehmung. Das Flächengebilde kann beispielsweise aus Gummi bestehen und am zweiten Federelement festgelegt sein. Dadurch wird verhindert, daß bei Einschnürungen der Ausnehmung in radialer Richtung nach innen das Verstärkungselement seine Lage in Bezug auf das zweite Federelement ändert. Diese Ausgestaltung ermöglicht eine besonders einfache Abstimmung der Federcharakteristik auf den jeweiligen Anwendungsfall des Motorlagers. Ein und dasselbe Motorlager kann praktisch allein durch Veränderung des Verstärkungselementes für nahezu alle Anwendungen zum Einsatz gelangen.

Das fließfähige Medium kann mit einem den atmosphärischen Druck übersteigenden Druck beaufschlagt werden. Die Beaufschlagung der Ausnehmung des zweiten Federelementes mit relativem Überdruck bietet sich insbesondere dann an, wenn als Steuermedium ein Fluid verwendet wird. Zur Dämpfung großer Auslenkbewegungen zwischen Traglager und Auflager, wie sie beispielsweise beim Oberfahren von Bordsteinkaten entstehen, wird das Fluid unter Druck über eine Leitung in die Ausnehmung des zweiten Federelementes eingebracht. Durch die Inkompressibilität des Fluids werden das erste und das zweite Federelement parallel geschaltet, wodurch sich eine vergleichsweise harte Federcharakteristik ergibt. Sollen anschließend wieder höher frequente Schwingungen mit kleineren Amplituden isoliert werden, ist es lediglich nötig, den Druck aus der Ausnehmung, beispielsweise über ein Hydraulikventil, entweichen zu lassen.

Das Medium kann auch mit einem den atmosphärischen Druck unterschreitenden Druck beaufschlagt werden. Das zweite Federelement ist, insbesondere im Bereich der Ausnehmung, schrumpfbar und von dem Verstärkungselement sofern es auf dem Außenumfang des zweiten Federelementes festgelegt ist, zumindest teilweise entfernbar. Dieses Verfahren ist von Vorteil, wenn ein gasförmiges Steuermedium verwendet wird. Das zur Steuerung benötigte Gasventil ist ein preiswertes Bauteil, was der Gesamtwirtschaftlichkeit des Lagers zugute kommt. Durch die Beaufschlagung der Ausnehmung des zweiten Federelementes mit Unterdruck wird diese nach innen eingebeult und ihre Steifigkeit weiter verringert. Auch eine Beaufschlagung des Raumes zwischen dem ersten und dem zweiten Federelement mit Unterdruck ist denkbar. Dann ist es allerdings erforderlich, daß das Verstärkungselement, in dem das zweite Federelement angeordnet ist, mit Ausnehmungen, beispielsweise mit Bohrungen versehen ist. Durch das Anlegen eines relativen Unterdrucks im Vergleich zu dem Druck, der in der Ausnehmung des zweiten Federelementes besteht, legt sich das zweite Federelement im Bereich der Ausnehmung an die Umfangswandung des Stützelementes an, wodurch das Motorlager zur Dämpfung niedrig frequenter Schwingungen genutzt werden kann. Ist das Verstärlungselement beispielsweise durch eine Armierung gebildet und im zweiten Federelement eingebettet, baucht sich die Ausnehmung in radialer Richtung nach außen soweit aus, bis das zweite Federelement eine im wesentlichen zylindrische Gestalt hat. Dabei ist allerdings zu beachten, daß sich auch das erste Federelement radial in Richtung des zweiten Federelementes verformt.

Die Ausnehmung im zweiten Federelement muß so dimensioniert und gestaltet sein, daß die Gassäule bei Betätigung der Unterdruckbeaufschlagung nicht in Resonanzschwingungen gerät. Sollen große Schwingungsamplituden gedämpft werden, muß die Ausnehmung im zweiten Federelement mit Überdruck beaufschlagt werden. Dies führt zu einer Verhärtung der Gesamtfedercharakteristik des Lagers.

Das erste Federelement kann das zweite Federelement ringförmig umschließen. Derart gestaltete Motorlager zeichnen sich durch gute Gebrauchseigenschaften, einfache Herstellbarkeit und geringe Abmessungen in radialer Richtung aus. Vorteilhaft darüberhinaus ist, daß der gesamte Innenbereich des Lagers, der aus dem Verstärkungselement und dem zweiten Federelement mit der Ausnehmung besteht gegen äußere Einflüsse gut geschützt ist. Diese Ausgestaltung bewirkt eine außerordentlich hohe Gebrauchsdauer des Lagers bei gleichbleibend guten Gebrauchseigenschaften.

Der Gegenstand der Erfindung wird nachfolgend anhand der in der Anlage beigefügten Zeichnungen weiter verdeutlicht.

Es zeigen jeweils in geschnittener Darstellung:
Fig. 1 ein Motorlager, dessen Verstärkungselement in das zweite Federelement eingebettet ist;
Fig. 2 ein Motorlager, dessen Verstärkungselement aus einem schlauchförmigen, textilen Flächengebilde besteht und
Fig. 3 ein Motorlager, bei dem das Verstärkungselement auf dem Außenumfang des zweiten Federelementes festgelegt ist.

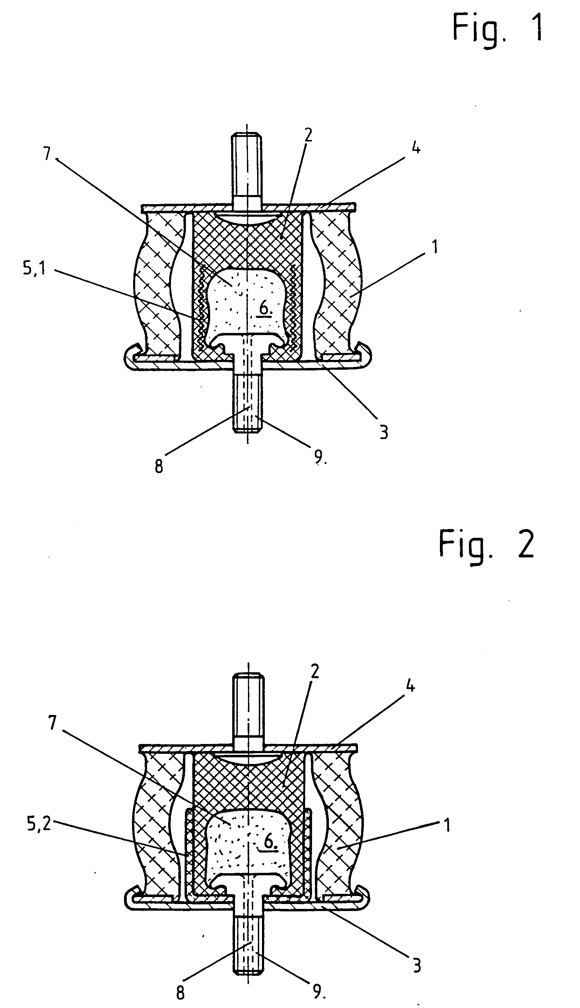

Das in Fig. 1 dargestellte Motorlager besteht im wesentlichen aus einem Traglager 3, einem Auflager 4 sowie zwei Federelementen 1, 2 wobei das erste Federelement 1 ringförmig gestaltet ist und einen Innendurchmesser aufweist, der größer ist als der Außendurchmesser des zweiten Federelementes 2. Das zweite Federelement 2 weist eine Ausnehmung 6 auf, die mit einem Steuermedium 7 über eine Zuleitung 8 befüllbar ist. Gemäß einer vorteilhaften Ausgestaltung ist es vorgesehen, daß die Zuleitung 8 einen Bestandteil eines Befestigungselementes 9 bildet. Das Steuermedium 7 kann zur Betätigung der Steuerung des Motorlagers sowohl flüssig als auch gasförmig sein. Das Verstärkungselement 5, das als Armierung 5.1 in das zweite Federelement 2 eingebettet ist, weist eine axiale Erstreckung auf, die ungefähr mit der Länge der Ausnehmung 6 übereinstimmt. Die Armierung weist in radialer Richtung nach innen eine vergleichsweise große Nachgiebigkeit auf um höher frequente Schwingungen in guter Weise zu isolieren. In radialer Richtung nach außen ist die Armierung 5.1 sehr wenig nachgiebig, so daß sich zum Dämpfen niedrig frequenter Schwingungen in der Ausnehmung 6 des zweiten Federelemente 2 ein ausreichend hoher Druck aufbauen kann.

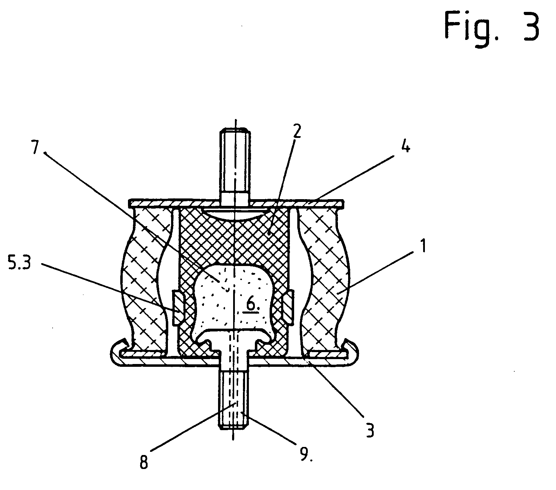

Die Fig. 2 und 3 entsprechen im wesentlichen Fig. 1, sind allerdings mit anderen Verstärkungselementen 5 versehen.

In Fig. 2 besteht das Verstärkungselement 5 aus einem schlauchförmigen, textilen Flächengebilde 5.2 das ungefähr die gleiche axiale Länge aufweist, wie die Ausnehmung 6 des zweiten Federelementes 2. In Fig. 3 wird das Verstärkungselement 5 durch einen Ring 5.3 gebildet, der aus Metall oder Kunststoff bestehen kann. Der Ring 5.3 ist in einer Nut des zweiten Federelementes 2 angeordnet, die sich ungefähr in der Mitte der Ausnehmung 6 entlang des Umfanges des zweiten Federelementes 2 erstreckt. Ist die Ausnehmung 6 nicht mit Überdruck beaufschlagt oder sogar mit Unterdruck beaufschlagt entfernt sich die Umfangswandung des zweiten Federelementes 2 von der Innenfläche des Ringes 5.3 und bewirkt so eine vergleichsweise große Nachgiebigkeit des Lagers in axialer Richtung. Bei Überdruckbeaufschlagung der Ausnehmung 6 legt sich die Außenumfangswand des zweiten Federelementes 2 gegen die Innenumfangswand des Ringes 5.3, der dann ein stabiles Widerlager bildet. Die Gesamtfedercharakteristik des steuerbaren Motorlagers wird spürbar härter und dämpft nun große Auslenkbewegungen zwischen Traglager 3 und Auflager 4 zuverlässig. An die jeweiligen Erfordernisse des Motorlagers angepaßt, besteht auch die Möglichkeit, in axialer Richtung entlang des Außenumfanges des zweiten Federelementes 2 mehrere Ringe festzulegen.

## Patentansprüche

1. Steuerbares Motorlager, bestehend aus einem Traglager und einem Auflager, die parallel zueinander durch ein erstes und ein zweites Federelement aus Gummi aufeinander abgestützt sind, wobei eines der Federelemente durch ein Hilfsmittel bedarfsweise blockierbar ist, dadurch gekennzeichnet, daß das erste Federelement (1) das zweite Federelement (2) in axialer Richtung zumindest teilweise übergreift, daß das zweite Federelement eine mittig angeordnete Ausnehmung (6) aufweist sowie zumindest ein ringförmiges Verstärkungselement (5) radial außerhalb der Ausnehmung (6), das im wesentlichen unverrückbar mit dem zweiten Federelement (2) verbunden ist, daß in die Ausnehmung (6) ein fließfähiges Medium (7) einspeisbar ist und daß das zweite Federelement (2) in Abhängigkeit von dem jeweiligen Druck des Mediums (7) im Bereich der Ausnehmung (6) versteifbar ist.

2. Motorlager nach Anspruch 1, dadurch gekennzeichnet, daß das Verstärkungselement (5) auf dem Außenumfang des zweiten Federelementes (2) festgelegt ist.

3. Motorlager nach Anspruch 1 bis 2, dadurch gekennzeichnet, daß das Verstärkungselement (5) in das zweite Federelement (2) eingebettet ist.

4. Motorlager nach Anspruch 1 bis 3, dadurch gekennzeichnet, daß das Verstärkungselement (5) aus einem schlauchförmigen, textilen Flächengebilde besteht.

5. Motorlager nach Anspruch 4, dadurch gekennzeichnet, daß das Flächengebilde eine mit der Ausnehmung (6) im wesentlichen übereinstimmende Länge in axialer Richtung aufweist.

6. Motorlager nach Anspruch 1 bis 5, dadurch gekennzeichnet, daß das fließfähige Medium (7) mit einem den atmosphärischen Druck übersteigenden Druck beaufschlagbar ist.

7. Motorlager nach Anspruch 1 bis 5, dadurch gekennzeichnet, daß das Medium (7) mit einem den atmosphärischen Durck unterschreitenden Druck beaufschlagbar ist und daß das zweite Federelement (2) hierdurch schrumpfbar und von dem Verstärkungselement (5) zumindest teilweise entfernbar ist.

8. Motorlager nach Anspruch 1 bis 7, dadurch gekennzeichnet, daß das erste Federelement (1) das zweite Federelemente (2) ringförmig umschließt.

## Claims

1. A controllable engine mount comprising a bearing mount and a support which are supported on one another, parallel to one another, by a first and a second resilient element composed of rubber, one of the resilient elements being blockable as required by an auxiliary means, characterised in that the first resilient element (1) engages at least partly over the second resilient element (2) in the axial direction, in that the second resilient element has a centrally arranged recess (6) and, radially outside the recess (6), at least one annular reinforcing element (5) which is connected essentially undisplaceably to the second resilient element (2), in that a flowable medium (7) can be fed into the recess (6) and in that the second resilient element (2) can be stiffened in dependence on the respective pressure of the medium (7) in the region of the recess (6).

2. An engine mount according to claim 1, characterised in that the reinforcing element (5) is fixed on the outer circumference of the second resilent element (2).

3. An engine mount according to either of claims 1 and 2, characterised in that the reinforcing element (5) is embedded in the second resilient element (2).

4. An engine mount according to any of claims 1 to 3, characterised in that the reinforcing element (5) is composed of a tubular, textile sheet-like structure.

5. An engine mount according to claim 4, characterised in that the sheet-like structure has a length in the axial direction essentially corresponding to the recess (6).

6. An engine mount according to any of claims 1 to 5, characterized in that the flowable medium (7) can be admitted with a pressure exceeding atmospheric pressure.

7. An engine mount according to any of claims 1 to 5, characterized in that the medium (7) can be admitted with a pressure which is below atmospheric pressure and in that the second resilient element (2) can be shrunk by this means and can be removed at least partly from the reinforcing element (5).

8. An engine mount according to any of claims 1 to 7, characterized in that the first resilient element (1) surrounds the second resilient element (2) in an annular manner.

## Revendications

1. Support de moteur réglable, constitué par un support porteur et un support d'appui, qui sont appuyés l'un sur l'autre, parallèlement l'un à l'autre, au moyen d'un premier et d'un deuxième élément élastique en caoutchouc, l'un des éléments élastiques pouvant, en cas de besoin, être bloqué grâce à un moyen de secours, caractérisé en ce que le premier élément élastique (1) recouvre le deuxième élément élastique (2), au moins partiellement, dans le sens axial, que le deuxième élément élastique est pourvu d'une cavité (6) située de manière centrale, ainsi que d'un élément de renforcement (5) au moins, en forme d'anneau disposé radialement à l'extérieur de la cavité (6), et lié, d'une manière généralement immuable, avec le deuxième élément élastique (6), qu'un milieu fluide (7) peut être injecté dans la cavité (6) et que le deuxième élément élastique (2) peut, en fonction de la pression du milieu (7) à un moment donné, être rigidifié dans la zone correspondant à la cavité (6).

2. Support de moteur selon la revendication 1, caractérisé en ce que l'élément de renforcement (5) peut être fixé sur la circonférence externe du deuxième élément élastique (2).

3. Support de moteur selon les revendications 1 et 2, caractérisé en ce que l'élément de renforcement (5) est noyé dans le deuxième élément élastique (2).

4. Support de moteur selon les revendications 1 à 3, caractérisé en ce que l'élément de renforcement (5) est constitué par une surface textile de forme tubulaire.

5. Support de moteur selon la revendication 4, caractérisé en ce que la forme de surface est pourvue, dans le sens axial, d'une longueur concordant à peu près avec la cavité (6).

6. Support de moteur selon les revendications 1 à 5, caractérisé en ce que le milieu fluide (7) peut être mis en pression avec une pression supérieure à la pression atmosphérique.

7. Support de moteur selon les revendications 1 à 5, caractérisé en ce que le milieu (7) peut également être mis en pression avec une pression inférieure à la pression atmosphérique et en ce que, par ce moyen, le deuxième élément élastique (2) est resserrable et peut être éloigné, au moins partiellement, de l'élément de renforcement (5).

8. Support de moteur selon les revendications 1 à 7, caractérisé en ce que le premier élément élastique (1) entoure le deuxième élément élastique (2) comme un anneau.
